# EUROPÄISCHE PATENTSCHRIFT

(11) **EP 3 518 492 B1**
(45) Veröffentlichungstag und Bekanntmachung des Hinweises auf die Patenterteilung: **30.06.2021**
(21) Anmeldenummer: 18154078.2
(22) Anmeldetag: 30.01.2018
(51) Int. Cl.: H04L 29/06, H04L 9/08, H04W 12/04, H04W 12/0431

(54) **VERFAHREN UND SYSTEM ZUR OFFENLEGUNG MINDESTENS EINES KRYPTOGRAPHISCHEN SCHLÜSSELS**
METHOD AND SYSTEM FOR DISCLOSING AT LEAST ONE CRYPTOGRAPHIC KEY
PROCÉDÉ ET SYSTÈME DE DIVULGATION D'AU MOINS UNE CLÉ CRYPTOGRAPHIQUE

(30) Priorität: 26.01.2018 EP 18153594
(43) Veröffentlichungstag der Anmeldung: 31.07.2019
(73) Patentinhaber: Siemens Aktiengesellschaft, 80333 München (DE)
(72) Erfinder: Falk, Rainer, 85586 Poing (DE); Fries, Steffen, 85598 Baldham (DE)

(56) Entgegenhaltungen:
- DE-A1-102010 011 656
- DIEBER BERNHARD ET AL: "Application-level security for ROS-based applications", 2016 IEEE/RSJ INTERNATIONAL CONFERENCE ON INTELLIGENT ROBOTS AND SYSTEMS (IROS), IEEE, 9. Oktober 2016 (2016-10-09), Seiten 4477-4482, XP033012009, DOI: 10.1109/IROS.2016.7759659
- PENG WEI ET AL: "A secure publish/subscribe protocol for Internet of Things using identity-based cryptography", 2016 5TH INTERNATIONAL CONFERENCE ON COMPUTER SCIENCE AND NETWORK TECHNOLOGY (ICCSNT), IEEE, 10. Dezember 2016 (2016-12-10), Seiten 628-634, XP033227673, DOI: 10.1109/ICCSNT.2016.8070234

## Beschreibung

Die Erfindung betrifft ein System, ein Computerprogrammprodukt sowie ein Verfahren zur Offenlegung mindestens eines kryptographischen Schlüssels, der zur Sicherung eine Kommunikationsverbindung zwischen einem ersten Kommunikationsteilnehmer und einem zweiten Kommunikationsteilnehmer verwendet wird.

In industriellen Anlagen und Automatisierungssystemen werden oftmals sensible Steuerungs- und Überwachungsdaten über ein Datennetzwerk übertragen. Um diese bei der Übertragung zu schützen, wird beispielsweise ein Sicherheitsprotokoll wie beispielsweise IPsec/IKEv2 oder MACsec und insbesondere das Transportschicht-Sicherheitsprotokoll TLS verwendet. Dabei werden die Authentizität der Kommunikationsteilnehmer überprüft und, abhängig von der Konfiguration des Protokolls, eine Manipulation und ein Abhören der Kommunikationsverbindung verhindert. Dazu werden meist beim Verbindungsaufbau kryptographische Schlüssel, beispielsweise Sitzungsschlüssel ausgehandelt, mit denen die übermittelten Daten verschlüsselt werden.

Andererseits besteht jedoch auch die Anforderung, die industrielle Anlage zu überwachen, um beispielsweise eine Fehlfunktion oder auch eine fehlerhafte Administration diagnostizieren zu können. Auch besteht in manchen Anwendungen die Anforderung, Steuerungskommunikation in einem "Blackbox Recorder" aufzuzeichnen, um im Falle eines Unfalls den Schadenshergang aufklären zu können. Auch kann die Anforderung bestehen, den Ablauf eines Produktionsvorgangs zu dokumentieren. Somit besteht insbesondere in industriellen Automatisierungs- und Steuerungssystemen auch ein Bedarf, kryptographisch geschützte und insbesondere verschlüsselte Kommunikationsverbindungen zu überwachen.

Um diese Anforderungen zu erfüllen, könnten für solche Anwendungen Steuerungsdaten ungeschützt übertragen werden. Dann kann zwar die Kommunikation überwacht werden, sie ist aber nicht mehr vor einem Abhören durch Dritte, noch vor einer Manipulation geschützt.

Es ist des Weiteren bekannt, sogenannte Integrity-Only-Cipher Suites beispielsweise in Verbindung mit einem Transportlayer Security Protokoll (TLS) Version 1.2 zu verwenden. Diese Integrity-Only-Cipher Suites schützen nur die Integrität der übertragenen Daten und stellen die Authentizität der Kommunikationspartner sicher. Es wird jedoch nicht die Vertraulichkeit der Daten geschützt, da die Nutzdaten als Klartext, also unverschlüsselt, übertragen werden. Dadurch kann hier die kryptographisch geschützte Kommunikation überwacht werden. Die Kommunikation ist aber gänzlich unverschlüsselt, so dass sie von beliebigen Dritten abhörbar ist. Dadurch ist eine solche Lösung bei einer Übertragung sensibler Prozessdaten oder bei einer Übertragung über öffentliche Netze nicht geeignet.

Des Weiteren ist ein Multi-Context-TLS Protokoll bekannt. Dabei wird beim Verbindungsaufbau, bei dem eine Authentifizierung und eine Schlüsselaushandlung stattfinden, dem Kommunikationspartner das Vorhandensein von Zwischenkomponenten signalisiert. Die damit beiden Kommunikationspartnern bekannten Zwischenkomponenten werden in die Aushandlung des Sitzungsschlüsselmaterials einbezogen. Ihnen wird ein Teil des Sitzungsschlüsselmaterials bereitgestellt. Dadurch können die im Verbindungsaufbau angegebenen Zwischenkomponenten den verschlüsselten Datenverkehr entschlüsseln, Änderungen würden jedoch durch die Kommunikationspartner detektiert werden. Dies hat den Vorteil, dass den beteiligten Kommunikationspartnern explizit die Zwischenkomponenten bekannt sind, die den Kommunikationsverkehr mithören können. Dies hat jedoch auch den Nachteil, dass die Zwischenkomponenten aktiv in der Aushandlung beteiligt sein müssen und dies somit zu einem zeitlich verzögerten Verbindungsaufbau führt. Andererseits können wiederum diese Zwischenkomponenten von unbefugten Dritten manipuliert und so die übertragenen Daten in Klartext zugänglich gemacht werden.

DIEBER Bernhard et al., Application Level Security for ROSbased Applications", 09.10.2016, XP033012009 offenbart ein Verfahren bei dem eine Kommunikation zwischen einem Roboterbetriebenen Systemen (ROS) beziehungsweise einer Applikation auf dem ROS und einem Anwender der Applikation über einen Sicherheitsmechanismus auf Applikationsebene geschützt wird. Dazu wird ein Publish-Subscribe-Server, der als Authentisierungsserver betrieben wird, verwendet.

PENG WEI ET AL: "A secure publish/subscribe protocol for Internet of Things using identity-based cryptography", 10.12.2016, XP033227673 beschreibt eine Identitäts-basierte Kryptographie, um eine Authentisierung der Identität durchzuführen und Vertrauenszonen mit verbesserter Sicherheit einzurichten. Dazu wird ein Publish-Subscribe-Server, der als IoT-Gateway ausgebildet ist, verwendet, um eine verschlüsselte Kommunikation zwischen der veröffentlichenden und subskribierenden Einheit bereitzustellen.

Es ist somit die Aufgabe der vorliegenden Erfindung einen zur Verschlüsselung einer Kommunikationsverbindung verwendeten kryptographischen Schlüssel flexibel und mit geringer zeitlicher Verzögerung einer Überwachungsvorrichtung bereitzustellen.

Die Aufgabe wird durch die in den unabhängigen Ansprüchen beschriebenen Maßnahmen gelöst. In den Unteransprüchen sind vorteilhafte Weiterbildungen der Erfindung dargestellt. Gemäß einem ersten Aspekt betrifft die Erfindung ein Verfahren zur Offenlegung mindestens eines kryptographischen Schlüssels, der zur Verschlüsselung mindestens einer Kommunikationsverbindung zwischen einem ersten Kommunikationsteilnehmer und einem zweiten Kommunikationsteilnehmer verwendet wird, wobei bei einem Publish-Subscribe-Server mindestens einer der Kommunikationsteilnehmer als eine veröffentlichende Einheit angemeldet wird und mindestens eine Überwachungseinrichtung als eine subskribierende Einheit angemeldet wird. Bei einer nachfolgenden Aushandlung eines kryptographischen Schüssels durch die veröffentlichende Einheit wird automatisch der ausgehandelte kryptographische Schlüssel von der veröffentlichenden Einheiten an den Publish-Subscribe-Server bereitgestellt, der ausgehandelte kryptographische Schlüssel von dem Publish-Subscribe-Server an die mindestens eine subskribierende Einheit übermittelt und die verschlüsselte Kommunikationsverbindung von der subskribierenden Einheit mit dem kryptographischen Schlüssel entschlüsselt.

Durch das beschriebene Verfahren kann in einer einfachen Weise ein kryptographischer Schlüssel einer Kommunikationsverbindung an eine Überwachungseinheit übermittelt und dieser offengelegt werden. Es genügt eine einmalige Anmeldung einer Überwachungseinheit als eine subskribierende Einheit beim Public-Subscribe Server um alle nachfolgenden verschlüsselten Kommunikationsverbindungen der Kommunikationsteilnehmer, die als veröffentlichende Einheiten bei dem Public-Subscribe Server angemeldet sind, zu entschlüsseln und somit in Klartext überführen zu können. Ein weiterer Vorteil ist, dass eine Vielzahl von Kommunikationsteilnehmern und ebenso Überwachungseinrichtungen zur Überwachung eingebunden werden können. Es bedarf keiner expliziten zusätzlichen Integration der Überwachungseinrichtung in die Schlüsselaushandlung einer Kommunikationsverbindung und führt somit zu keiner oder lediglich einer geringfügigen Verzögerung der Aufbauzeit der Kommunikationsverbindung. Auch können unterschiedliche Überwachungseinrichtungen flexibel hinzugefügt oder auch aus der Überwachung herausgenommen werden. Das Anmelden eines Kommunikationsteilnehmers als veröffentlichende Einheit umschließt auch ein Eintragen von Kommunikationsteilnehmern als veröffentlichende Einheit durch Dritte in den Publish-Subscribe Server, beispielsweise bei einem Konfigurieren des Publish-Subscribe Servers.

Der kryptographische Schlüssel wird somit über ein Publish-Subscribe Nachrichtenschema offengelegt, bei dem eine veröffentlichende Einheit eine Nachricht, hier den kryptographischen Schlüssel, nicht direkt an den eigentlichen Empfänger, d.h. die subskribierende Einheit, adressiert, sondern statt dessen zu veröffentlichende Nachrichten zu einem vorgegebenen Thema an eine zwischengeschalteten Vermittlereinheit, auch message broker oder hier Publish-Subscribe Server genannt, sendet ohne die subskribierende Einheit zu kennen. Entsprechend teilt die subskribierende Einheit ihr Interesse an Nachrichten zu dem Thema dem Publish-Subscribe Server mit ohne den genauen Sender, d.h. die veröffentlichende Einheit zu kennen. Im hier beschriebenen Verfahren ist das vorgegebene Thema die Offenlegung des kryptographischen Schlüssels. Die zu veröffentlichenden Nachrichten, die im vorliegenden Verfahren den kryptographischen Schlüssel enthalten, werden somit vom Kommunikationsteilnehmer als veröffentlichenden Einheit beim Publish-Subscribe Server zum Thema "Offenlegung des kryptographischen Schlüssels" empfangen und an die zu diesem Thema angemeldeten Überwachungseinheiten als subskribierende Einheiten weitergegeben.

In einer vorteilhaften Ausführungsform wird der ausgehandelte kryptographische Schlüssel lediglich für eine Kommunikationsverbindung, die mindestens ein vorgegebenes Kriterium erfüllt, von der veröffentlichenden Einheit bereitgestellt.

Durch diese vorgegebenen Kriterien kann eine Überwachung flexibel an unterschiedliche Anforderung angepasst werden. Eine Überwachung kann somit auf bestimmte Kommunikationsverbindungen reduziert werden, so dass Offenlegungsfälle auf ein Minimum reduziert werden können.

In einer vorteilhaften Ausführungsform wird als Kriterium ein für die Kommunikationsverbindung verwendetes Protokoll, eine Adresse, beispielsweise eine IP-Adresse, des Kommunikationspartners, einen für die Kommunikationsverbindung verwendeten Domain-Namensystem- Namen, eine verwendete Port-Nummer oder eine Kombination der genannten Kriterien verwendet.

Somit kann eine Offenlegung der kryptographischen Schlüssel auf bestimmte Anwendungen, bestimmte Kommunikationspartner oder auch Kommunikationsprovider beschränkt werden.

In einer vorteilhaften Ausführungsform wird der ausgehandelte kryptographische Schlüssel lediglich für eine von der veröffentlichenden Einheit ausgehende oder an die veröffentliche Einheit eingehende Kommunikationsverbindung bereitgestellt. Somit können gezielt eingehende oder ausgehende Kommunikationsverbindungen des Kommunikationsteilnehmers überwacht werden.

In einer vorteilhaften Ausführungsform wird zusätzlich ein Integritätsschlüssel, der für eine Integritätsprüfung der Kommunikationsverbindung verwendet wird, an den Publish-Subscribe-Server bereitgestellt.

Dies hat den Vorteil, dass insbesondere auch eine Integritätsprüfung einer Kommunikationsverbindung durchgeführt werden kann.

In einer vorteilhaften Ausführungsform wird der ausgehandelte kryptographische Schlüssel sofort nach Aufbau der Kommunikationsverbindung oder erst nach Ablauf einer vorgegebenen Zeitdauer an die subskribierende Einheit übermittelt.

So kann beispielsweise eine Kommunikationsverbindung nur zeitversetzt oder erst nach Abschluss der aktuellen Kommunikationsverbindung überwacht werden. So können Kommunikationsverbindungen mit hochsensiblen Daten, erst mit einem Zeitversatz entschlüsselt und überwacht werden. Andererseits wird eine flexible Handhabung von zeitkritischen übermittelten Daten ermöglicht.

In einer vorteilhaften Ausführungsform wird ein Bindungswert des mindestens einen kryptographischen Schlüssels bereitgestellt beziehungsweise übermittelt.

Ein Bindungswert, häufig auch Commitmentwert genannt, kann beispielsweise ein Hashwert des kryptographischen Schlüssels sein.

Dies hat den Vorteil, dass geprüft werden kann, ob tatsächlich beide Kommunikationsteilnehmer den gleichen Schlüssel erhalten haben. Als Commitmentwert kann aber auch der bei einem Diffie-Hellman-Schlüsselaustausch übermittelten Schlüsselkomponenten verwendet werden.

In einer vorteilhaften Ausführungsform wird der kryptographische Schlüssel mit einem vom kryptographischen Schlüssel unterschiedlichen Transportschlüssel, insbesondere einem öffentlichen Schlüssel der subskribierenden Einheit oder einem Gruppenschlüssel, verschlüsselt bereitgestellt beziehungsweise übermittelt.

Die Verwendung eines Transportschlüssels hat den Vorteil, dass die Autorisierung zum Zugriff auf den aktuellen kryptographischen Schlüssel von der Verteilung über den Publish-Subscribe-Server getrennt ist. So kann beispielsweise die Autorisierung zum Zugriff auf den aktuellen kryptographischen Schlüssel durch die Verfügbarkeit des entsprechenden öffentlichen Schlüssels beziehungsweise des Gruppenschlüssels im Kommunikationsteilnehmer abhängig gemacht werden. So kann trotz einer Subskription einer Überwachungseinrichtung bei dem Publish-Subscribe-Server die Überwachungseinrichtung einen kryptographischen Schlüssel nur dann verwenden, wenn ein Kommunikationsteilnehmer den kryptographischen Schlüssel mit dem entsprechenden öffentlichen Schlüssel der Überwachungseinrichtung verschlüsselt hat. Bei einem Gruppenschlüssel als Transportschlüssel kann eine Überwachungseinrichtung lediglich Kommunikationsverbindungen von Kommunikationsteilnehmern überwachen, die den gleichen Gruppenschlüssel wie die Überwachungseinrichtung verwenden.

In einer vorteilhaften Ausführungsform wird der Transportschlüssel über einen Publish-Subscribe-Server an den Kommunikationsteilnehmer als veröffentlichende Einheit übermittelt, nachdem sich der Kommunikationsteilnehmer als eine zweite subskribierende Einheit und mindestens eine Überwachungseinrichtung als zweite veröffentlichende Einheit bei dem Publish-Subscribe-Server zur Verteilung der Transportschlüssel angemeldet haben.

Dies hat den Vorteil, dass keine unterschiedlichen Verteilmechanismen für die Verteilung des Veröffentlichungsschlüssels als auch des Transportschlüssels benötigt werden. Die Verteilung der Transportschlüssel kann somit ähnlich wie die Verteilung der Veröffentlichungsschlüssel flexibel gestaltet werden.

In einer vorteilhaften Ausführungsform wird zur Offenlegung des kryptographischen Schlüssels ein Publish-Subscribe-Protokoll, insbesondere ein Sitzungseinleitungsprotokoll SIP, ein einheitliches Architekturprotokoll der OPC-Stiftung OPC-UA, ein erweiterbares Nachrichten- und Anwesenheitsprotokoll XMPP, ein erweitertes Nachrichtenwarteschlagenprotokoll AMQP oder auch ein Nachrichtenwarteschlangen Telemetriedaten Transportprotokoll MQTT eingesetzt.

Dies hat den Vorteil, dass diese weit verbreiteten Protokolle, die auch den Publish- und Subscribe-Prozess unterstützen, zur Durchführung des Verfahrens bereitstellen.

Ein weiterer Aspekt der Erfindung betrifft ein System zur Offenlegung mindestens eines kryptographischen Schlüssels, der zur Verschlüsselung mindestens einer Kommunikationsverbindung zwischen einem ersten Kommunikationsteilnehmer und einem zweiten Kommunikationsteilnehmer verwendet wird, umfassend mindestens einen ersten Kommunikationsteilnehmer, mindestens einen zweiten Kommunikationsteilnehmer, mindestens eine Überwachungseinrichtung und einen Publish-Subscribe-Server, wobei
- die mindestens eine Überwachungseinrichtung derart ausgebildet ist sich als eine subskribierende Einheit bei dem Publish-Subscribe-Server anzumelden, den ausgehandelten kryptographischen Schlüssel vom Publish-Subscribe-Server zu empfangen und die verschlüsselte Kommunikationsverbindung mit dem kryptographischen Schlüssel (KK) zu entschlüsseln,
- mindestens einer der Kommunikationsteilnehmer derart ausgebildet ist, sich bei dem Publish-Subscribe-Server als eine veröffentlichende Einheit anzumelden und
   bei jeder nachfolgenden Aushandlung eines kryptographischen Schlüssels den ausgehandelten kryptographischen Schlüssel an einen Publish-Subscribe-Server bereitzustellen, und
- der Publish-Subscribe-Server derart ausgebildet ist ausgehandelte kryptographische Schlüssel an eine Überwachungseinrichtung zu übermitteln.

In einer vorteilhaften Ausführungsform ist das System derart ausgebildet das Verfahren gemäß dem beschriebenen Verfahren auszuführen.

In einer vorteilhaften Ausführungsform sind die mindestens eine subskribierende Einheit, die mindestens eine veröffentlichende Einheit und der Publish-Subscribe-Server derart ausgebildet sind, Themen-basierte Publish-Subscribe-Verfahren durchzuführen.

Dies hat den Vorteil, dass ein oder mehrere Publish-Subscribe-Server mehrere Publish-Subscribe-Verfahren durchführen können. Das heißt, dass eine subskribierende Einheit sich für mehrere Themen subskribieren kann und entsprechend von den für diese Themen als veröffentlichende Einheiten angemeldeten Kommunikationsteilnehmern Informationen erhalten kann. Andererseits kann ein Kommunikationsteilnehmer für unterschiedliche Themen als subskribierende oder als veröffentlichende Einheit angemeldet sein kann. Auf diese Weise kann beispielsweise eine Verteilung des kryptographischen Schlüssels als auch des Transportschlüssels in umgekehrte Übertragungsrichtungen zwischen Kommunikationsteilnehmer und Überwachungseinheit durchgeführt werden.

In einer vorteilhaften Ausführungsform ist die Überwachungseinrichtung innerhalb einer Kommunikationsverbindung angeordnet.

In einer vorteilhaften Ausführungsform ist eine Verbindungseinrichtung innerhalb der Kommunikationsverbindung angeordnet und die Überwachungseinrichtung als physisch von der Verbindungseinrichtung (150) getrennte Komponente ausgebildet und mit der Verbindungseinrichtung verbunden.

Dies hat den Vorteil, dass mehrere Verbindungseinrichtungen mit einer oder wenigen Überwachungseinrichtungen verbunden sein können und somit zentral die Überwachung von Kommunikationsverbindungen, die über verschiedenste Verbindungseinrichtungen geführt werden, überwacht werden können.

Ein weiterer Aspekt der Erfindung betrifft ein Computerprogrammprodukt, das direkt in einen Speicher eines digitalen Computers ladbar ist, umfassend Programmcodeteile, die dazu geeignet sind, die Schritte des beschriebenen Verfahrens durchzuführen.

Ausführungsbeispiele des erfindungsgemäßen Systems sowie des erfindungsgemäßen Verfahrens sind in den Zeichnungen beispielhaft dargestellt und werden anhand der nachfolgenden Beschreibung näher erläutert. Es zeigen:
- Figur 1: ein erstes Ausführungsbeispiel des erfindungsgemä-ßen Systems in Blockdarstellung;
- Figur 2: ein zweites Ausführungsbeispiel des erfindungsgemä-ßen Systems mit einer Überwachungseinrichtung au-ßerhalb der Kommunikationsverbindung in Blockdar-stellung;
- Figur 3: ein drittes Ausführungsbeispiel des erfindungsgemä-ßen Systems mit Offenlegung eines Transportschlüs-sels, in Blockdarstellung;
- Figur 4: ein erstes Ausführungsbeispiel des erfindungsgemäßen Verfahrens in Form eines Nachrichten-Ablaufdiagramms und
- Figur 5: ein zweites Ausführungsbeispiel des erfindungsgemäßen Verfahrens zur Offenbarung des Transportschlüssels als Nachrichten-Ablaufdiagramm.

Die im Nachfolgenden beschriebenen Einrichtungen, wie beispielsweise Kommunikationsteilnehmer, Überwachungseinrichtung oder auch Publish-Subscribe-Server, können Hardware-technisch oder auch Software-technisch oder in Kombination als Hardware-Software-Codesign implementiert sein. Bei einer Hardware-technischen Implementierung kann die jeweilige Einheit als Vorrichtung oder als Teil einer Vorrichtung, zum Beispiel als Computer oder als Mikroprozessor oder als Steuerrechner ausgebildet sein. Bei einer Software-technischen Implementierung kann die jeweilige Einheit als Computerprogrammprodukt, als eine Funktion, als eine Routine, als Teil eines Programmcodes oder als ausführbares Objekt ausgebildet sein. Bei einer Hardware-Software-Codesign-technischen Implementierung kann die jeweilige Einheit teilweise als Vorrichtung oder als Teil einer Vorrichtung, zum Beispiel als Computer oder als Mikroprozessor oder als Steuerrechner und teilweise als Computerprogrammprodukt, als eine Funktion, als eine Routine, als Teil eines Programmcodes oder als ausführbares Objekt ausgebildet sein.

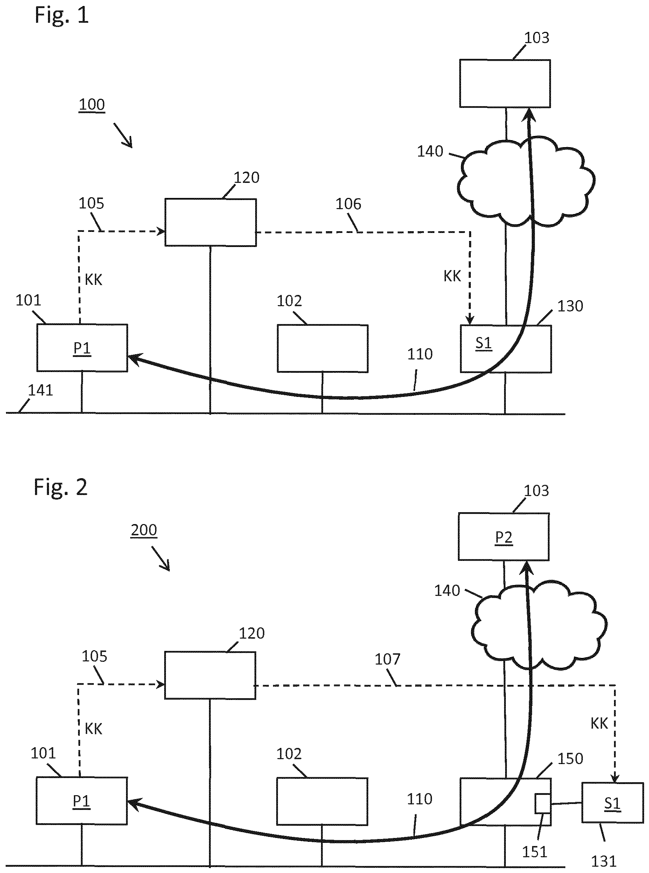

Das in Figur 1 dargestellt System 100 stellt beispielsweise eine industrielle Anlage, beispielsweise ein Verkehrssicherungsnetz oder ein Automatisierungssystem, dar, in dem Kommunikationsteilnehmer 101, 102, 103 über ein internes, privates Kommunikationsnetz 141 oder auch über ein öffentliches Kommunikationsnetz 140 Daten austauschen. Zur Übertragung der Daten werden insbesondere Sicherheitsprotokolle wie beispielsweise das Transportschicht-Sicherheitsprotokoll TLS oder das Datagram Transportschicht Sicherheitsprotokoll DTLS oder auch Sicherheitsprotokolle wie IPsec/IKEv2 oder MACsec verwendet. Die Kommunikationsteilnehmer 101 und 102 können beispielsweise als Feldgeräte eines Automatisierungssystems ausgebildet sein. Der Kommunikationsteilnehmer 103 kann beispielsweise eine ausgelagerte Vorrichtung sein, die einen Dienst dem System 100 bereitstellt. Zum Austausch von Daten ist eine Kommunikationsverbindung 110 beispielshaft zwischen einem ersten Kommunikationsteilnehmer 101 und einem zweiten Kommunikationsteilnehmer 103 durch ein Sicherheitsprotokoll aufgebaut. Über die Kommunikationsverbindung 110 werden verschlüsselt übertragen, um eine Manipulation und ein Abhören der Kommunikation zu verhindern. Eine Überwachungseinheit 130 des Systems 100 ist derart ausgebildet, die verschlüsselte Kommunikationsverbindung 110 zu entschlüsseln und zur Speicherung oder weiteren Auswertung bereitzustellen.

Üblicherweise wird beim Aufbau einer Kommunikationsverbindung durch ein Sicherheitsprotokoll ein kryptographischer Schlüssel KK, beispielsweise ein Sitzungsschlüssel, bestimmt, mit dem die zu übertragenden Daten verschlüsselt werden. Daher muss dieser kryptographische Schlüssel KK der Überwachungseinrichtung 130 bekannt sein, um die verschlüsselten Daten entschlüsseln und auswerten zu können.

Erfindungsgemäß wird die Offenlegung des mindestens einen kryptographischen Schlüssels KK durch ein Publish-Subscribe-Verfahren, insbesondere einem Themen-basierten Publish-Subscribe-Verfahren, realisiert. Dazu ist mindestens einer der Kommunikationsteilnehmer 101 und 103 der Kommunikationsverbindung 110, hier lediglich Kommunikationsteilnehmer 101 derart ausgebildet, sich bei einem Publish-Subscribe-Server 120 als eine veröffentlichende Einheit P1 anzumelden. Die Kommunikationsteilnehmer können auch durch einen Dritten beim Publish-Subscribe-Server 120 angemeldet werden oder im Publish-Subscribe-Server 120 vorkonfiguriert sein. Die als publizierende Einheit P1 ausgebildete Kommunikationsvorrichtung 101 ist derart ausgebildet, den mindestens einen kryptographischen Schlüssel in festgelegten Schlüssel-Veröffentlichungsereignissen, so genannten Events, die kryptographischen Schlüssel an den Publish-Subscribe-Server 120 weiterleiten.

Eine oder mehrere Überwachungseinheiten, in Figur 1 die Überwachungseinheit 130, sind derart ausgebildet sich als subskribierende Einheiten, hier subskribierende Einheit S1 beim Publish-Subscribe-Server 120 anzumelden. Der Publish-Subscribe-Server 120 ist dabei derart ausgebildet, Daten zwischen der veröffentlichenden Einheit P1 und der subskribierenden Einheit S1 zu übermitteln.

Bevorzugt melden sich die Überwachungseinrichtung sowie der mindestens eine Kommunikationsteilnehmer zu einem Thema beim Publish-Subscribe-Server 120 an. Durch dieses Thema wird festgelegt, welche Information oder Nachrichten, hier beispielsweise der kryptographischen Schlüssel KK, übermittelt werden soll. Im vorliegenden Fall lautet das Publish-Subscribe-Thema beispielsweise "Offenbarung des kryptographischen Schlüssels KK". Im dargestellten Beispiel wird somit der kryptographische Schlüssel KK von der veröffentlichenden Einheit P1 an den Publish-Subscribe-Server 120 übermitteltet, siehe Pfeil 105. Im Publish-Subscribe-Server 120 wird der kryptographische Schlüssel KK abhängig von vorgegebenen Kriterien für die Kommunikationsverbindung und Richtlinien, wie beispielsweise eine zeitlich verzögerte Weitergabe an die subskribierende Einheit S1, also der Überwachungseinrichtung 130, übermittelt, siehe Pfeil 106. Solche Kriterien sind beispielsweise ein zum Aufbau der Kommunikationsverbindung verwendetes Verbindungsprotokoll, oder eine Adresse, hier beispielsweise einer IP-Adresse oder auch MAC-Adresse, oder einer Portnummer des Kommunikationsteilnehmer 103, oder des adressierten DNS-Server Namens oder auch die Berechtigung eines der Teilnehmer an einer entsprechenden Kommunikation teilzunehmen.

Der als publizierende Einheit P1 registrierte Kommunikationsteilnehmer 101 übermittelt nach einer einmaligen Registrierung als veröffentlichende Einheit P1, automatisch bei jedem nachfolgenden Verbindungsaufbau den ausgehandelten kryptographischen Schlüssels KK dem Publish-Subscribe-Server 120.

Die Überwachungseinrichtung 130 kann beispielsweise in einer Firewall ausgebildet sein, über die eine Kommunikationsverbindung 110 zu einem über ein öffentliches Netz 140 angebundenen Kommunikationsteilnehmer 103 geführt wird.

Des Weiteren kann als kryptographischer Schlüssel KK lediglich der Verschlüsselungsschlüssel, der zur Verschlüsselung der auf der Kommunikationsverbindung 110 zu übertragenden Daten verwendet wird, oder zusätzlich ein Integritätsschlüssel, der für eine Integritätsprüfung der Kommunikationsverbindung verwendet wird, an den Publish-Subscribe-Server 120 bereitgestellt werden. Auch kann der ausgehandelte kryptographische Schlüssel KK lediglich für eine von der veröffentlichenden Einheit P1 ausgehende oder lediglich eine eingehende Kommunikationsverbindung 110 oder für ausgehende und eingehende Kommunikationsverbindung 110 bereitgestellt werden.

Es ist weiterhin möglich, einen Bindungswert, häufig auch als Commitment-Wert bezeichnet, eines Schlüssels statt des eigentlichen kryptographischen Schlüssels KK zu übermitteln. Dieser Bindungswert kann beispielsweise der Hashwert des kryptographischen Schlüssels KK sein. Der eigentliche kryptographische Schlüssel wird erst zu einem späteren Zeitpunkt der subskribierenden Einheit S1 übermittelt. Anhand des Bindungsschlüssels kann überprüft werden, ob der richtige kryptographische Schlüssel KK nachträglich bereitgestellt wurde. Somit kann eine dritte Stelle überprüfen, ob tatsächlich sowohl der Publish-Subscribe-Server als auch die subskribierende Einheit den gleichen Schlüssel erhalten haben. Diese dritte Stelle kann z.B. eine Überprüfungseinrichtung sein, die zur Auditierung oder zum Logging genutzt wird.

Figur 2 zeigt ein System 200, in dem eine Überwachungseinrichtung 131 nicht direkt innerhalb der Kommunikationsverbindung 110 angeordnet ist. Im System 200 ist die Überwachungseinrichtung 131, die als subskribierende Einheit S1 als Empfänger des kryptographischen Schlüssels beim Publish-Subscribe-Server 120 angemeldet ist, mit einer Verbindungseinrichtung 150 verbunden. Die Verbindungseinrichtung 150 ist innerhalb der Kommunikationsverbindung 110 angeordnet und leitet die verschlüsselten Daten der Kommunikationsverbindung 110 weiter. Die Überwachungseinheit 150 umfasst dabei beispielsweise einen Spiegelausgang 151, der die auf der Kommunikationsverbindung 110 übertragenen verschlüsselten Daten kopiert und an die Überwachungseinheit 131 weiterleitet. Der kryptographische Schlüssel KK wird dabei vom Publish-Subscribe-Server 120 an die Überwachungseinheit 131 als subskribierende Einheit S1 übermittelt, siehe Pfeil 107. Dies kann über eine separate Verbindung zwischen dem Publish-Subscribe-Server 120 und der Überwachungseinrichtung 131 erfolgen. Der kryptographische Schlüssel kann aber auch vom Publish-Subscribe-Server 120 über die Verbindungseinrichtung 150 an die Überwachungseinrichtung 131 übermittelt werden. Dabei kann der kryptographische Schlüssel KK über den Spiegelausgang 151 an die Überwachungseinrichtung 131 weitergegeben werden.

Im System 200 ist zusätzlich der zweite Kommunikationsteilnehmer 103 als veröffentlichende Einheit P2 beim Publish-Subscribe-Server 120 angemeldet. In diesem Fall veröffentlicht der zweite Kommunikationsteilnehmer 103 ebenfalls den für die Kommunikationsverbindung 110 ausgehandelten kryptographischen Schlüssel oder die ihm bekannten Bestandteile des kryptographischen Schlüssels KK. Sind sowohl der erste als auch der zweite Kommunikationsteilnehmer 101, 103 als publizierende Einheiten P1, P2 registriert, so können auch lediglich Komponenten des kryptographischen Schlüssels KK der subskribierenden Einheit S1 übermittelt werden. Die subskribierende Einheit S1 kann aus den übermittelten Komponenten den in der Kommunikationsverbindung 110 verwendeten kryptographischen Schlüssels KK selbst ermitteln. Beispielsweise können die übertragenen Komponenten des kryptographischen Schlüssels KK die bei einem Diffie-Hellman-Verschlüsselungsverfahren ausgetauschten Verschlüsselungskomponenten sein.

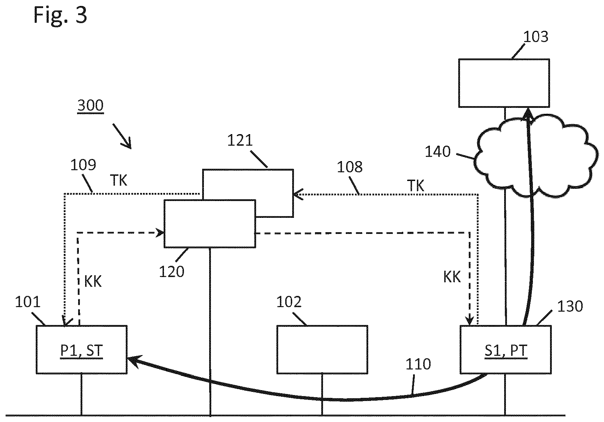

Figur 3 zeigt ein System 300, in dem entsprechend dem System 100 aus Figur 1. Der erste Kommunikationsteilnehmer 101 ist dabei als veröffentlichende Einheit P1 bei dem Publish-Subscribe-Server 120 angemeldet. Die Überwachungseinheit 130 ist innerhalb einer zu überwachenden Kommunikationsverbindung 110 angeordnet und als subskribierende Einheit S1 beim Publish-Subscribe-Server 120 angemeldet.

Zusätzlich zum Publish-Subscribe-Server 120 ist ein zweiter Publish-Subscribe-Server 121 im System 300 angeordnet, zur Offenlegung eines Transportschüssels konfiguriert ist. Der Publish-Subscribe-Server 121 ist entsprechend dem bereits beschriebenen Publish-Subscribe-Server 120 ausgebildet, realisiert jedoch ein Publish-Subscribe-Verfahren zu einem zweiten Thema, nämlich dem Austausch eines Transportschlüssels zwischen dem ersten Kommunikationsteilnehmer 101 und der Überwachungseinheit 130. Dabei ist die Überwachungseinrichtung 130 zusätzlich als zweite veröffentlichende Einheit PT zum zweiten Thema, der erste Kommunikationsteilnehmer 101, als zweite subskribierende Einheit ST zum zweiten Thema im Publish-Subscribe-Server 121 angemeldet. Die Überwachungseinrichtung 130 veröffentlicht den Transportschüssel TK, indem sie diesen an den Publish-Subscribe-Server 121 übermittelt, siehe Pfeil 108. Bei einem entsprechend im Publish-Subscribe-Server 121 eingerichteten Ereignis übermittelt dieser den Transportschüssel TK an den ersten Kommunikationsteilnehmer 101, siehe Pfeil 109. Ein solches Ereignis, auch als Event bezeichnet, ist beispielsweise die Registrierung des ersten Kommunikationsteilnehmers 101 bei dem Publish-Subscribe-Server 120 zum Thema "Veröffentlichung eines kryptographischen Schlüssels KK".

In einer vorteilhaften Ausführungsform sind der Publish-Subscribe-Server 121 und der Publish-Subscribe-Server 120 integriert in der gleichen Hardware ausgebildet. Der Kommunikationsteilnehmer 101 als zweite subskribierende Einheit ST erhält somit automatisch den Transportschüssel TK der Überwachungseinheit 130 als veröffentlichende Einheit PT. Ändert die Überwachungseinrichtung 130 den Transportschüssel TK, so wird dieser wieder von der Überwachungseinrichtung 130 als zweite veröffentlichende Einheit PT an den Publish-Subscribe-Server 121 übermittelt.

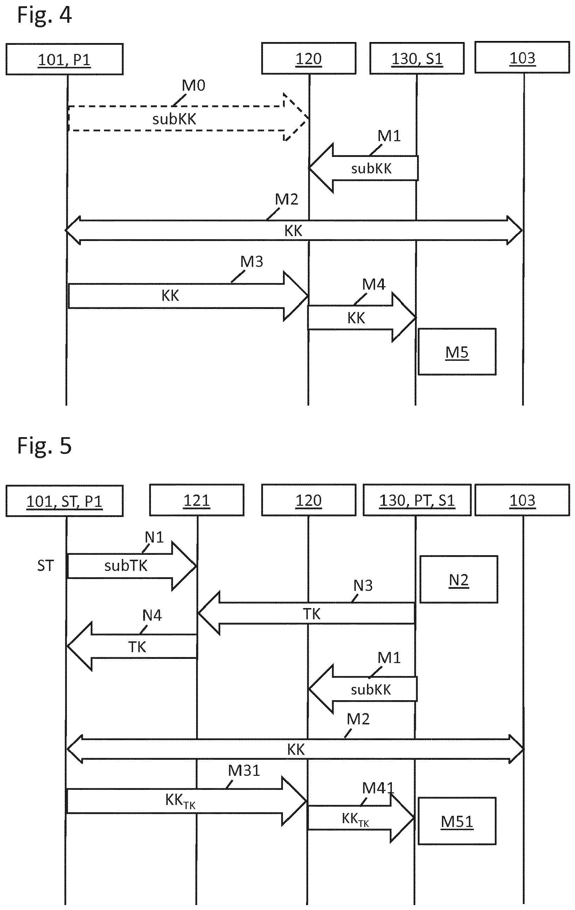

Figur 4 zeigt nun das beschriebene Verfahren anhand eines Nachrichtenflusses eines Publish-Subscribe-Protokolls, das die Übertragung der dazu notwendigen Information steuert. Als Publish-Subscribe-Protokoll kann beispielsweise ein Sitzungseinleitungs-Protokoll SIP, ein einheitliches Architekturprotokoll der OPC-Stiftung, auch abgekürzt als OPC UA bekannt, ein erweiterbares Nachrichten- und Anwesenheitsprotokoll XMPP oder ein erweitertes Nachrichten-Warteschlangenprotokoll AMQP oder MQTT zur Durchführung der Verfahrensschritte eingesetzt werden.

Im Publish-Subscribe-Server 120 wird in einem ersten Verfahrensschritt M0 der erste Kommunikationsteilnehmer 101 als publizierende Einheit P1 für das Publish-Subscribe-Thema "kryptographischer Schlüssel" subKK angemeldet. Dies kann aktiv durch einen Nachrichtenaustausch M0, wie in Figur 4 als gestrichelter Pfeil dargestellt, erfolgen. Der erste Kommunikationsteilnehmer 101 kann aber auch im Publish-Subscribe-Server 120 durch Konfiguration als publizierende Einheit P1 angemeldet sein. Bei einer aktiven Anmeldung eines Kommunikationsteilnehmers beim Publish-Subscribe-Server 120 können vorteilhafterweise ohne zusätzliche Konfiguration des Publish-Subscribe-Servers 120 dynamisch publizierende Einheiten hinzugefügt oder auch abgemeldet werden.

Im Schritt M1 meldet sich die Überwachungseinrichtung 130 als subskribierende Einheit S1 zum Publish-Subscribe-Thema "kryptographischer Schlüssel" subKK beim Publish-Subscribe-Server 120 an. Nachfolgend wird im Schritt M2 im Zuge eines Aufbaus einer Kommunikationsverbindung, beispielsweise über das TLS-Protokoll, eine Authentifizierung sowie eine Schlüsselvereinbarung zwischen dem ersten Kommunikationsteilnehmer 101 und einem zweiten Kommunikationsteilnehmer 103 durchgeführt. Der dabei vereinbarte kryptographische Schlüssel KK kann beispielsweise ein Sitzungsschlüssel sein und ist den beiden Kommunikationsteilnehmern 101, 103 bekannt. Im Schritt M3 übermittelt der als publizierende Einheit P1 im Publish-Subscribe-Server 120 eingetragene erste Kommunikationsteilnehmer 101, beispielsweise unter Angabe einer Verbindungsbeziehungsweise Sitzungskennung, sowie einer Kennung des ersten und zweiten Kommunikationsteilnehmers, den ausgehandelten kryptographischen Schlüssel KK an den Publish-Subscribe-Server 120. Dieser leitet bei einem für das Publish-Subscribe-Thema "kryptographischer Schlüssel" vereinbarten Ereignisses den kryptographischen Schlüssel KK sowie beispielsweise die Sitzungskennung, die Kennungen des ersten sowie zweiten Kommunikationsteilnehmers 101, 103, an die Überwachungseinrichtung 130 als subskribierende Einheit S1 weiter, siehe Schritt M4. In der Überwachungseinheit 130 wird nun im Schritt M5 der Datenverkehr der Kommunikationsverbindung zwischen dem ersten und zweiten Kommunikationsteilnehmer 101 und 103 decodiert und analysiert. Die Auswertung des decodierten Datenverkehrs kann dabei direkt anschließend an die Decodierung erfolgen oder aber zu einem späteren Zeitpunkt durchgeführt werden.

Um eine geschützte Übertragung des kryptographischen Schlüssels KK vom Kommunikationsteilnehmer 101 an den Publish-Subscribe Server 120 und von dort aus weiter zur Überwachungseinrichtung 130 zu ermöglichen, kann bereits bei der Registrierung zum Publish-Subscribe-Thema "kryptographischer Schlüssel" im Verfahrensschritt M0 ein Transportschüssel TK vom Publish-Subscribe Server 120 an den ersten Kommunikationsteilnehmer 101 übermittelt werden. Dies ist zur Wahrung der Übersicht nicht explizit in Figur 4 dargestellt. Der Transportschlüssel TK kann beispielsweise im Publish-Subscribe Server 120 für das Publish-Subscribe-Thema "kryptographischer Schlüssel" und in der Überwachungseinheit 130 vorkonfiguriert sein.

Alternativ zu einem vorkonfigurierten Transportschlüssel TK kann der Transportschüssel TK, wie in Figur 5 dargestellt, ebenfalls über ein Publish-Subscribe-Verfahren nun zu einem Publish-Subscribe-Thema "Transportschüssel" subTK an den ersten Kommunikationsteilnehmer 101 bereitgestellt werden. Dabei ist die Überwachungseinrichtung 130 als zweite publizierende Einheit PT beispielsweise in einem zweiten Publish-Subscribe-Server 121 konfiguriert beziehungsweise meldet sich dort dynamisch an, nicht dargestellt. Im Gegenzug melden sich Kommunikationsteilnehmer 101, 102 oder 103, die eine Überwachung durch die Überwachungseinrichtung 130 erlauben, als subskribierende Einheit ST an. Dies ist beispielhaft für den ersten Kommunikationsteilnehmer 101 als zweite subskribierende Einheit ST als Verfahrensschritt N1 eingezeichnet.

Liegt in der Überwachungseinheit 130 ein erster oder ein aktualisierter Transportschüssel TK vor, siehe N2, so übermittelt die Überwachungseinrichtung 130 als zweite publizierende Einheit PT den Transportschüssel TK in Verfahrensschritt N3 an den zweiten Publish-Subscribe-Server 121. Dieser leitet beim Auftreten eines Ereignisses, das für das zweite Publish-Subscribe-Thema "Transportschüssel" festgelegt wurde, den Transportschüssel TK in Schritt N4 an alle als zweite subskribierenden Einheiten ST, hier den ersten Kommunikationsteilnehmer 101, weiter. Handelt der erste Kommunikationsteilnehmer 101 einen kryptographischen Schlüssel KK für eine Kommunikationsverbindung zum Kommunikationsteilnehmer 103 aus, siehe M2, so nutzt der erste Kommunikationsteilnehmer 101 im Weiteren den Transportschüssel TK um den ausgehandelten kryptographischen Schlüssel KK zu verschlüsseln und den verschlüsselten kryptographischen Schlüssel KK_{TK} als publizierende Einheit P1 zum Thema "kryptographischer Schlüssel" an den ersten Publish-Subscribe-Server 120 zu übermitteln, siehe Schritt M31. Der Publish-Subscribe-Server 120 leitet den mit dem Transportschlüssel TK verschlüsselten kryptographischen Schlüssel KK_{TK} an die Überwachungseinrichtung 130 als subskribierende Einheit S1 weiter, siehe Schritt M41. Die Überwachungseinrichtung 130 kann nun den verschlüsselten kryptographischen Schlüssel KK_{TK} mit dem ihr bekannten Transportschlüssel TK entschlüsseln und den kryptographischen Schlüssel KK zur Entschlüsselung der zu überwachende Kommunikationsverbindungen verwenden, siehe Schritt M51. Eine Anmeldung des Kommunikationsteilnehmers 101 zum Publish-Subscribe-Thema "Transportschüssel" kann alternativ auch nach einer Anmeldung der Überwachungseinrichtung 130 zum Publish-Subscribe-Thema "kryptographischer Schüssel" beim Publish-Subscribe Server 120, siehe Verfahrensschritt M1, durchgeführt werden.

Das beschriebene Verfahren zur Offenlegung mindestens eines kryptographischen Schlüssels hat den Vorteil, dass es einfach zu realisieren ist, und weit verbreitete Protokolle als Publish-Subscribe-Protokolle verwendet werden können. Eine Vielzahl von Kommunikationsteilnehmern können effizient kryptographische Schlüssel bereitstellen und deren Kommunikationsverbindungen überwacht werden. Gleichzeitig können unterschiedlichste Überwachungsvorrichtungen effizient und einfach zur Entschlüsselung und Überwachung der übertragenen Daten einbezogen werden. Weiterhin besteht durch den Publish-Subscribe-Server eine einfache Möglichkeit festzuhalten, welche Überwachungseinheiten welche kryptographische Schlüssel erhalten haben. Ebenso kann eine Überwachung durch Überwachungseinrichtungen erfolgen, die nicht selbst innerhalb der Kommunikationsverbindung liegen.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Offenlegung mindestens eines kryptographischen Schlüssels (KK), der zur Verschlüsselung mindestens einer Kommunikationsverbindung (110) zwischen einem ersten Kommunikationsteilnehmer (101) und einem zweiten Kommunikationsteilnehmer (103) verwendet wird, wobei
- bei einem Publish-Subscribe-Server (120) mindestens einer der Kommunikationsteilnehmer (101, 103) als eine veröffentlichende Einheit (P1, P2) angemeldet und mindestens eine Überwachungseinrichtung (130, 131) als eine subskribierende Einheit (S1) angemeldet wird, und
bei einer nachfolgenden Aushandlung eines kryptographischen Schlüssels (KK) beim Aufbau einer Kommunikationsverbindung (110) zwischen dem ersten und dem zweiten Kommunikationsteilnehmer (101, 103) durch die veröffentlichende Einheit (P1, P2) automatisch
- der ausgehandelte kryptographischen Schlüssel (KK) von der veröffentlichenden Einheit (P1) an den Publish-Subscribe-Server (120) bereitgestellt wird,
- der ausgehandelte kryptographische Schlüssel (KK) von dem Publish-Subscribe-Server (120) an die mindestens eine subskribierende Einheit (S1) übermittelt wird, und
- die verschlüsselte Kommunikationsverbindung (110) von der subskribierende Einheit (S1) mit dem kryptographischen Schlüssel (KK) entschlüsselt wird.

2. Verfahren nach Anspruch 1, wobei der ausgehandelte kryptographische Schlüssel (KK) lediglich für eine Kommunikationsverbindung (110), die mindestens ein vorgegebenes Kriterium erfüllt, von der veröffentlichenden Einheit (P1) bereitgestellt wird.

3. Verfahren nach Anspruch 2, wobei als Kriterium ein für die Kommunikationsverbindung (110) verwendetes Protokoll, eine Adresse eines Kommunikationspartners, ein für die Kommunikationsverbindung (110) verwendeter Domain-Namensystem-Name, eine verwendete Port-Nummer oder eine Kombination der genannten Kriterien verwendet wird.

4. Verfahren nach einem der vorhergehenden Ansprüche, wobei der ausgehandelte kryptographische Schlüssel (KK) lediglich für eine von der veröffentlichenden Einheit (P1) ausgehende oder an der veröffentlichenden Einheit (P2) eingehende Kommunikationsverbindung (110) bereitgestellt wird.

5. Verfahren nach einem der vorhergehenden Ansprüche, wobei zusätzlich ein Integritätsschlüssel, der für eine Integritätsprüfung der Kommunikationsverbindung (110) verwendet wird, an den Publish-Subscribe-Server (120) bereitgestellt wird.

6. Verfahren nach einem der vorhergehenden Ansprüche, wobei der ausgehandelte kryptographische Schlüssel (KK) sofort nach Aufbau der Kommunikationsverbindung (110) an die subskribierende Einheit (S1) übermittelt wird.

7. Verfahren nach einem der Ansprüche 1 bis 5, wobei der ausgehandelte kryptographische Schlüssel (KK) erst nach Ablauf einer vorgegebenen Zeitdauer nach Aufbau der Kommunikationsverbindung (110) an die subskribierende Einheit (S1) übermittelt wird.

8. Verfahren nach einem der vorhergehenden Ansprüche, wobei ein Bindungs-Wert des mindestens einen kryptographischen Schlüssels (KK) bereitgestellt bzw. übermittelt wird.

9. Verfahren nach einem der vorhergehenden Ansprüche, wobei der kryptographische Schlüssel (KK) mit einem vom kryptographische Schlüssel (KK) unterschiedlichen Transportschlüssel (TK), verschlüsselt bereitgestellt wird.

10. Verfahren nach Anspruch 9, wobei der Transportschlüssel (TK) ein öffentlicher Schlüssel der Überwachungseinheit (130, 131) oder ein Gruppenschlüssel ist.

11. Verfahren nach Anspruch 9 oder 10, wobei der Transportschlüssel (TK) über einen Publish-Subscribe Server (121) an den Kommunikationsteilnehmer (101) als veröffentlichende Einheit (P1) übermittelt wird, nachdem der Kommunikationsteilnehmer (101) als eine zweite subskribierende Einheit (ST) und mindestens eine Überwachungseinrichtung (130) als zweite veröffentlichende Einheit (PT) bei dem Publish-Subscribe Server (121) zur Verteilung der Transportschlüssel (TK) anmeldet wurden.

12. Verfahren nach einem der vorhergehenden Ansprüche, wobei ein Publish-Subscribe Protokoll, insbesondere ein Sitzungseinleitungsprotokoll SIP, ein einheitliches Architektur Protokoll der OPC Stiftung OPC UA, erweiterbares Nachrichten- und Anwesenheitsprotokoll XMPP, ein erweitertes Nachrichten-warteschlangenprotokoll AMQP oder ein Nachrichtenwarteschlangen-Telemetriedaten-Transport Protokoll MQTT zur Offenlegung des kryptographischen Schlüssels eingesetzt wird.

13. System zur Offenlegung mindestens eines kryptographischen Schlüssels (KK), der zur Verschlüsselung mindestens einer Kommunikationsverbindung (110) zwischen einem ersten Kommunikationsteilnehmer (101) und einem zweiten Kommunikationsteilnehmer (103) verwendet wird, umfassend mindestens einen ersten Kommunikationsteilnehmer (101), mindestens einen zweiten Kommunikationsteilnehmer (103), mindestens eine Überwachungseinrichtung (130, 131) und einen Publish-Subscribe-Server (120), wobei
- die mindestens eine Überwachungseinrichtung (130, 131) derart ausgebildet ist sich als eine subskribierende Einheit (S1) bei dem Publish-Subscribe-Server (120) anzumelden, den ausgehandelten kryptographischen Schlüssel (KK) vom Publish-Subscribe-Server (120)zu empfangen und
die verschlüsselte Kommunikationsverbindung (110) mit dem kryptographischen Schlüssel (KK) zu entschlüsseln,
- mindestens einer der Kommunikationsteilnehmer (101, 103) derart ausgebildet ist, sich bei dem Publish-Subscribe-Server (120) als eine veröffentlichende Einheit (P1, P2) anzumelden und
bei einer nachfolgenden Aushandlung eines kryptographischen Schlüssels (KK) beim Aufbau einer Kommunikationsverbindung (110) zwischen dem ersten und dem zweiten Kommunikationsteilnehmer (101, 103) den ausgehandelten kryptographischen Schlüssel (KK) an einen Publish-Subscribe-Server (120) bereitzustellen,
- der Publish-Subscribe-Server (120) derart ausgebildet ist ausgehandelte kryptographische Schlüssel (KK) an eine Überwachungseinrichtung (130, 150) zu übermitteln.

14. System nach Anspruch 13, wobei das System derart ausgebildet ist das Verfahren gemäß Anspruch 1 bis 12 auszuführen.

15. System nach Anspruch 13 oder 14, wobei der mindestens eine Kommunikationsteilnehmer (101, 103), die Überwachungseinheit (130, 131) und der Publish-Subscribe-Server (120, 121) derart ausgebildet sind Themen-basierte Publish-Subscribe-Verfahren durchzuführen.

16. System nach einem der Ansprüche 13 bis 15, wobei die Überwachungseinrichtung (130) innerhalb der Kommunikationsverbindung (110) angeordnet ist.

17. System nach einem der Ansprüche 13 bis 15, wobei eine Verbindungseinrichtung (150) innerhalb der Kommunikationsverbindung (110) angeordnet ist und die Überwachungseinrichtung (131) als physisch von der Verbindungseinrichtung (150) getrennte Einheit ausgebildet und mit der Verbindungseinrichtung (150) verbunden ist.

18. Computerprogrammprodukt, das direkt in einen Speicher eines digitalen Computers ladbar ist, umfassend Programmcodeteile, die dazu geeignet sind, die Schritte des Verfahrens nach einem der Ansprüche 1 bis 12 durchzuführen.

## Claims

1. Method for disclosing at least one cryptographic key (KK) which is used to encrypt at least one communication connection (110) between a first communication subscriber (101) and a second communication subscriber (103), wherein
- at least one of the communication subscribers (101, 103) is registered as a publishing unit (P1, P2) with a publish/subscribe server (120) and at least one monitoring device (130, 131) is registered as a subscribing unit (S1), and
when subsequently negotiating a cryptographic key (KK) by means of the publishing unit (P1, P2) when setting up a communication connection (110) between the first and second communication subscribers (101, 103) automatically
- the negotiated cryptographic key (KK) is made available to the publish/subscribe server (120) by the publishing unit (PI),
- the negotiated cryptographic key (KK) is transmitted from the publish/subscribe server (120) to the at least one subscribing unit (S1), and
- the encrypted communication connection (110) is decrypted by the subscribing unit (S1) using the cryptographic key (KK).

2. Method according to Claim 1, wherein the negotiated cryptographic key (KK) is provided by the publishing unit (P1) only for a communication connection (110) which satisfies at least one predefined criterion.

3. Method according to Claim 2, wherein a protocol used for the communication connection (110), an address of a communication partner, a domain name system name used for the communication connection (110), a port number used or a combination of said criteria is used as the criterion.

4. Method according to one of the preceding claims, wherein the negotiated cryptographic key (KK) is provided only for a communication connection (110) starting from the publishing unit (P1) or arriving at the publishing unit (P2).

5. Method according to one of the preceding claims, wherein an integrity key which is used to check the integrity of the communication connection (110) is additionally made available to the publish/subscribe server (120).

6. Method according to one of the preceding claims, wherein the negotiated cryptographic key (KK) is immediately transmitted to the subscribing unit (S1) after setting up the communication connection (110).

7. Method according to one of Claims 1 to 5, wherein the negotiated cryptographic key (KK) is transmitted to the subscribing unit (S1) only after expiry of a predefined period after setting up the communication connection (110).

8. Method according to one of the preceding claims, wherein a commitment value of the at least one cryptographic key (KK) is provided or transmitted.

9. Method according to one of the preceding claims, wherein the cryptographic key (KK) is provided in a manner encrypted with a transport key (TK) which differs from the cryptographic key (KK).

10. Method according to Claim 9, wherein the transport key (TK) is a public key of the monitoring unit (130, 131) or a group key.

11. Method according to Claim 9 or 10, wherein the transport key (TK) is transmitted to the communication subscriber (101) as a publishing unit (P1) via a publish/subscribe server (121) after the communication subscriber (101) has been registered as a second subscribing unit (ST) and at least one monitoring device (130) has been registered as a second publishing unit (PT) with the publish/subscribe server (121) for distributing the transport keys (TK).

12. Method according to one of the preceding claims, wherein a publish/subscribe protocol, in particular a session initiation protocol SIP, a unified architecture protocol of the OPC foundation OPC UA, an extensible messaging and presence protocol XMPP, an advanced message queuing protocol AMQP or a message queuing telemetry transport protocol MQTT, is used to disclose the cryptographic key.

13. System for disclosing at least one cryptographic key (KK) which is used to encrypt at least one communication connection (110) between a first communication subscriber (101) and a second communication subscriber (103), comprising at least one first communication subscriber (101), at least one second communication subscriber (103), at least one monitoring device (130, 131) and a publish/subscribe server (120), wherein
- the at least one monitoring device (130, 131) is designed to be registered as a subscribing unit (S1) with the publish/subscribe server (120), to receive the negotiated cryptographic key (KK) from the publish/subscribe server (120) and to decrypt the encrypted communication connection (110) using the cryptographic key (KK),
- at least one of the communication subscribers (101, 103) is designed to be registered as a publishing unit (P1, P2) with the publish/subscribe server (120), and
to make the negotiated cryptographic key (KK) available to a publish/subscribe server (120) during subsequent negotiation of a cryptographic key (KK) when setting up a communication connection (110) between the first and second communication subscribers (101, 103),
- the publish/subscribe server (120) is designed to transmit negotiated cryptographic keys (KK) to a monitoring device (130, 150) .

14. System according to Claim 13, wherein the system is designed to carry out the method according to Claims 1 to 12.

15. System according to Claim 13 or 14, wherein the at least one communication subscriber (101, 103), the monitoring unit (130, 131) and the publish/subscribe server (120, 121) are designed to carry out topic-based publish/subscribe methods.

16. System according to one of Claims 13 to 15, wherein the monitoring device (130) is arranged inside the communication connection (110).

17. System according to one of Claims 13 to 15, wherein a connection device (150) is arranged inside the communication connection (110) and the monitoring device (131) is in the form of a unit physically separate from the connection device (150) and is connected to the connection device (150).

18. Computer program product which can be directly loaded into a memory of a digital computer, comprising program code parts which are suitable for carrying out the steps of the method according to one of Claims 1 to 12.

## Revendications

1. Procédé de divulgation d'au moins une clé cryptographique (KK) qui est utilisée pour crypter au moins une liaison de communication (110) entre un premier participant à la communication (101) et un deuxième participant à la communication (103),
- au moins un des participants à la communication (101, 103) est connecté en tant qu'entité publiante (P1, P2) à un serveur publish/subscribe (120) et au moins un dispositif de surveillance (130, 131) y est connecté en tant qu'entité souscriptrice (S1) et,
lors d'une négociation suivante d'une clé cryptographique (KK) lors de l'établissement d'une liaison de communication (110) entre le premier et le deuxième participant à la communication (101, 103) par l'entité publiante (P1, P2), automatiquement,
- la clé cryptographique négociée (KK) est fournie par l'entité publiante (P1) au serveur publish/subscribe (120),
- la clé cryptographique négociée (KK) est transmise du serveur publish/subscribe (120) à l'au moins une entité souscriptrice (S1) et
- la liaison de communication cryptée (110) est décryptée par l'entité souscriptrice (S1) avec la clé cryptographique (KK).

2. Procédé selon la revendication 1, la clé cryptographique négociée (KK) étant fournie par l'entité publiante (P1) seulement pour une liaison de communication (110) qui remplit au moins un critère donné.

3. Procédé selon la revendication 2, en tant que critères étant utilisés un protocole utilisé pour la liaison de communication (110), une adresse d'un partenaire de communication, un nom de système de nom de domaine utilisé pour la liaison de communication (110), un numéro de port utilisé ou une combinaison desdits critères.

4. Procédé selon l'une des revendications précédentes, la clé cryptographique négociée (KK) étant fournie seulement pour une liaison de communication (110) partant de l'entité publiante (P1) ou entrant au niveau de l'entité publiante (P2).

5. Procédé selon l'une des revendications précédentes, une clé d'intégrité qui est utilisée pour un contrôle d'intégrité de la liaison de communication (110) étant fournie additionnellement au serveur publish/subscribe (120).

6. Procédé selon l'une des revendications précédentes, la clé cryptographique négociée (KK) étant transmise à l'entité souscriptrice (S1) immédiatement après l'établissement de la liaison de communication (110).

7. Procédé selon l'une des revendications 1 à 5, la clé cryptographique négociée (KK) n'étant transmise à l'entité souscriptrice (S1) qu'après l'expiration d'une durée de temps donnée après l'établissement de la liaison de communication (110) .

8. Procédé selon l'une des revendications précédentes, une valeur de liaison de l'au moins une clé cryptographique (KK) étant fournie resp. transmise.

9. Procédé selon l'une des revendications précédentes, la clé cryptographique (KK) étant fournie cryptée avec une clé de transport (TK) différente de la clé cryptographique (KK).

10. Procédé selon la revendication 9, la clé de transport (TK) étant une clé publique de l'unité de surveillance (130, 131) ou une clé de groupe.

11. Procédé selon la revendication 9 ou 10, la clé de transport (TK) étant transmise via un serveur publish/subscribe (121) au participant à la communication (101) en tant qu'entité publiante (P1) après que le participant à la communication (101) en tant que deuxième entité souscriptrice (ST) et au moins un dispositif de surveillance (130) en tant que deuxième entité publiante (PT) se sont connectés au serveur publish/subscribe (121) pour distribuer les clés de transport (TK).

12. Procédé selon l'une des revendications précédentes, un protocole publish/subscribe, et plus particulièrement un protocole d'initiation de session SIP, un protocole d'architecture unifiée de la fondation OPC OPC UA, un protocole extensible de messagerie et de présence XMPP, un protocole étendu de file d'attente de messages AMQP ou ou un protocole de transport de données télémétriques de file d'attente de messages MQTT est utilisé pour divulguer la clé cryptographique.

13. Système de divulgation d'au moins une clé cryptographique (KK) qui est utilisée pour crypter au moins une liaison de communication (110) entre un premier participant à la communication (101) et un deuxième participant à la communication (103), comprenant au moins un premier participant à la communication (101), au moins un deuxième participant à la communication (103), au moins un dispositif de surveillance (130, 131) et un serveur publish/subscribe (120),
- l'au moins un dispositif de surveillance (130, 131) étant conçu pour se connecter en tant qu'entité souscriptrice (S1) au serveur publish/subscribe (120), pour recevoir la clé cryptographique négociée (KK) du serveur publish/subscribe (120) et pour décrypter la liaison de communication cryptée (110) avec la clé cryptographique (KK),
- au moins un des participants à la communication (101, 103) étant conçu pour se connecter au serveur publish/subscribe (120) en tant qu'entité publiante (P1, P2) et
pour, lors d'une négociation suivante d'une clé cryptographique (KK) lors de l'établissement d'une liaison de communication (110) entre le premier et le deuxième participant à la communication (101, 103), fournir la clé cryptographique négociée (KK) à un serveur publish/subscribe (120),
- le serveur publish/subscribe (120) étant conçu pour transmettre des clés cryptographiques négociées (KK) à un dispositif de surveillance (130, 150).

14. Système selon la revendication 13, le système étant conçu pour exécuter le procédé selon la revendication 1 à 12.

15. Système selon la revendication 13 ou 14, l'au moins un participant à la communication (101, 103), l'unité de surveillance (130, 131) et le serveur publish/subscribe (120, 121) étant conçus pour exécuter des procédés publish/subscribe basés sur des thèmes.

16. Système selon l'une des revendications 13 à 15, le dispositif de surveillance (130) étant agencé dans la liaison de communication (110).

17. Système selon l'une des revendications 13 à 15, un dispositif de liaison (150) étant agencé dans la liaison de communication (110) et le dispositif de surveillance (131) étant réalisé en tant qu'unité séparée physiquement du dispositif de liaison (150) et étant reliée au dispositif de liaison (150).

18. Produit de programme informatique qui peut être chargé directement dans une mémoire d'un ordinateur numérique, comprenant des parties de code de programme qui sont adaptées pour exécuter les étapes du procédé selon l'une des revendications 1 à 12.
